# EUROPÄISCHE PATENTSCHRIFT

(11) **EP 0 772 109 B1**
(45) Veröffentlichungstag und Bekanntmachung des Hinweises auf die Patenterteilung: **11.07.2001**
(21) Anmeldenummer: 96117452.1
(22) Anmeldetag: 31.10.1996
(51) Int. Cl.: G05D 16/06

(54) **Zweistufiger Gasdruckregler**
Two-step gas pressure regulator
Régulateur de pression de gaz à deux étages

(30) Priorität: 03.11.1995 DE 19541051
(43) Veröffentlichungstag der Anmeldung: 07.05.1997
(73) Patentinhaber: GMT GASELAN Gas-, Mess- und Regeltechnik GmbH & Co. KG, 64521 Gross-Gerau (DE)
(72) Erfinder: Ackermann, Otto, 65479 Reinheim (DE); Boppré, Jürgen, 65207 Wiesbaden (DE); Rittel, Rainer, 56179 Vallendar (DE)
(74) Vertreter: Schieferdecker, Lutz, Dipl.-Ing.

(56) Entgegenhaltungen:
- DE-A- 2 007 436
- DE-A- 3 813 962
- DE-A- 4 133 931
- FR-A- 2 618 868
- GB-A- 409 043

## Beschreibung

Die Erfindung bezieht sich auf einen zweistufigen Gasdruckregler mit einem Gehäuse, das einen Gaseinlaß zu einer Einlaßkammer, eine Zwischenkammer und eine Auslaßkammer mit einem Gasauslaß aufweist, mit einem Vorregelventil, das einen Vorventilkörper mit einem zugeordneten Vorstellantrieb und einem Vorventilsitz aufweist, der einer Öffnung in einer Trennwand zwischen der Einlaßkammer und der Zwischenkammer zugeordnet ist, und mit einem Hauptregelventil, das einen Hauptventilkörper mit einem zugeordneten Hauptstellantrieb und einem Hauptventilsitz aufweist, der einer Öffnung in einer Trennwand zwischen der Zwischenkammer und der Auslaßkammer zugeordnet ist, und wobei zusätzlich ein Sicherheitsabsperrventil mit einem zugehörigen Sicherheitsstellantrieb und somit drei Baugruppen vorgesehen sind und in ein Gehäuse integriert sind.

Ein solcher zweistufiger Gasdruckregler ist aus FR-A 2 618 868 bekannt.

Zweistufige Gasdruckregler arbeiten genauer als einstufige Druckregler und liefern einen konstanteren Auslaßdruck (Abgabedruck), wobei sich starke Schwankungen im herabzusetzenden höheren Einlaßdruck (Eingangsdruck) praktisch nicht mehr auswirken, denn durch die Vorregelung auf den in der Zwischenkammer herrschenden Zwischendruck werden die Einlaßdruckschwankungen schon weitgehend eliminiert. Das vorgesehene Sicherheitsabsperrventil soll bei Unterschreitung eines Mindestdrucks und/oder insbesondere bei Überschreitung des abgabeseitigen zulässigen Höchstdrucks den Gasstrom durch den Druckregler vollständig sperren.

Nachteilig ist beim bekannten zweistufigen Gasdruckregler jedoch die vergleichsweise aufwendige und wenig kompakte Bauweise. In diesem Zusammenhang ist anzumerken, daß beim bekannten Gasdruckregler die Wirkrichtung des Hauptregelventils in der Achse des Gaseinlasses liegt, daß der Gaseinlaß und der Gasauslaß um 90 Grad zueinander versetzt sind und daß die Wirkrichtungen des Vorregelventils und des Sicherheitsabsperrventils jeweils um 90 Grad sowohl gegenüber der Achse des Gaseinlasses als auch gegenüber der Achse des Gasauslasses versetzt sind.

Dementsprechend liegt der Erfindung die Aufgabe zugrunde, einen zweistufigen Gasdruckregler mit genauer Regelung auf einen konstanten Ausgangsdruck zu schaffen, der sich besonders kompakt und zugleich kostengünstig herstellen läßt und dabei auch wesentlichen Sicherheitsanforderungen genügt.

Diese Aufgabe wird ausgehend von einem zweistufigen Gasdruckregler der eingangs beschriebenen Art erfindungsgemäß dadurch gelöst, daß die Wirkrichtung des Hauptregelventils einerseits und die Wirkrichtung des Vorregelventils und die des Sicherheitsabsperrventils andererseits jeweils die Achse von Gaseinlaß und Gasauslaß in das Gehäuse schneiden und wobei ferner die Wirkrichtungen des Hauptregelventils einerseits und des Sicherheitsabsperrventils andererseits um 90 Grad zueinander versetzt sind.

Zweckmäßige Ausgestaltungen und Weiterbildungen des erfindungsgemäßen zweistufigen Gasdruckreglers ergeben sich aus den Unteransprüchen.

Der erfindungsgemäße Gasdruckregler erreicht nicht nur infolge seiner Zweistufigkeit eine hohe Regelgenauigkeit, darüber hinaus werden durch das integrierte Sicherheitsabsperrventil auch erhöhte Sicherheitsanforderungen erfüllt. Dabei sind die drei Baugruppen hinsichtlich ihrer Funktion unabhängig voneinander sowie hintereinander geschaltet. Dies bedeutet, daß der Ausfall einer Baugruppe sich nicht nachteilig auswirken kann, da dann eine andere Baugruppe die Funktion der ausgefallenen Baugruppe übernehmen kann oder das Gasdruckregelgerät schaltet ab. Das Sicherheitsabsperrventil greift dabei den Druck im Gasauslaß ab und beeinflußt unmittelbar den Gaseinlaß koaxial zur Vorstufe bzw. konkret in fluchtender Anordnung eine zweiseitig wirkende Düse koaxial zu dem Vorregelventil.

Die Verwendung von vorzugsweise baugleichen Teilen für die Stellantriebe (Vergleichsgeräte), die durch ihre Vorspannung bzw. Voreinstellung das geregelte Druckniveau bestimmen, führt zu Kostenvorteilen sowie zu einer Vereinfachung bei der Lagerhaltung und der Herstellung. Dabei läßt sich auch eine besondere kompakte Gestaltung erzielen, insbesondere wenn die in den Unteransprüchen aufgeführten diesbezüglichen Maßnahmen beachtet werden.

Ein Ausführungsbeispiel der Erfindung wird nachfolgend anhand einer schematischen Zeichnung näher erläutert.
Es zeigen:
- Fig. 1: das mit einem Sicherheitsabsperrventil versehene, zweistufige Gasdruckregelgerät in Seitenansicht sowie zum Teil im Schnitt;
- Fig. 2: einen vergrößerten, axialen Teilschnitt durch das Vorregelventil gemäß Fig. 1;
- Fig. 3: einen entsprechend vergrößerten Teilschnitt durch das Hauptregelventil gemäß Fig. 1;
- Fig. 4: einen entsprechend vergrößerten Teilschnitt durch das Sicherheitsabsperrventil gemäß Fig. 1 sowie
- Fig. 5 u.Fig. 6: Schnitte mit Gaseinlaß und Gasauslaß.

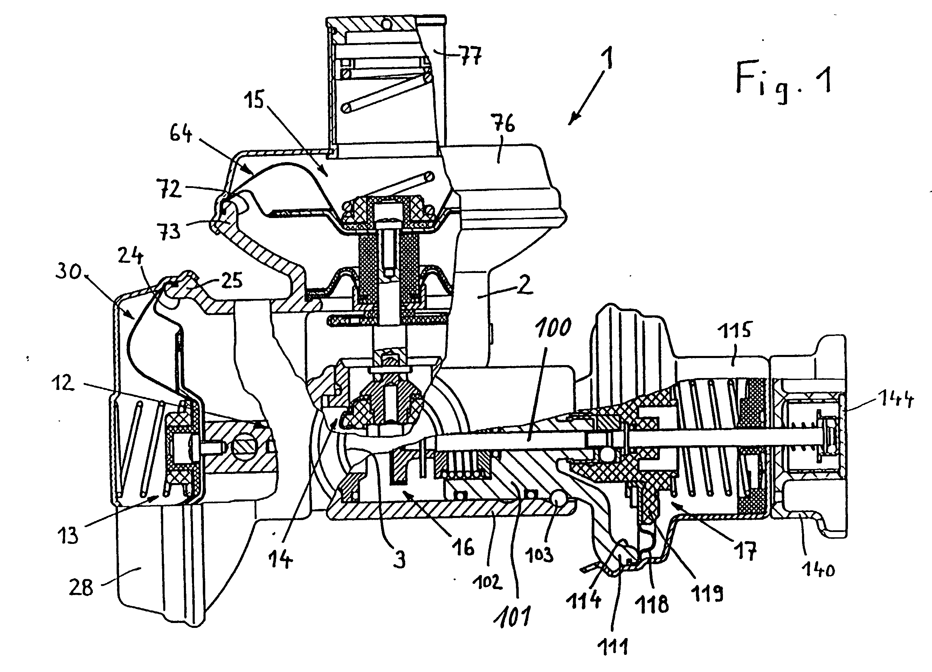

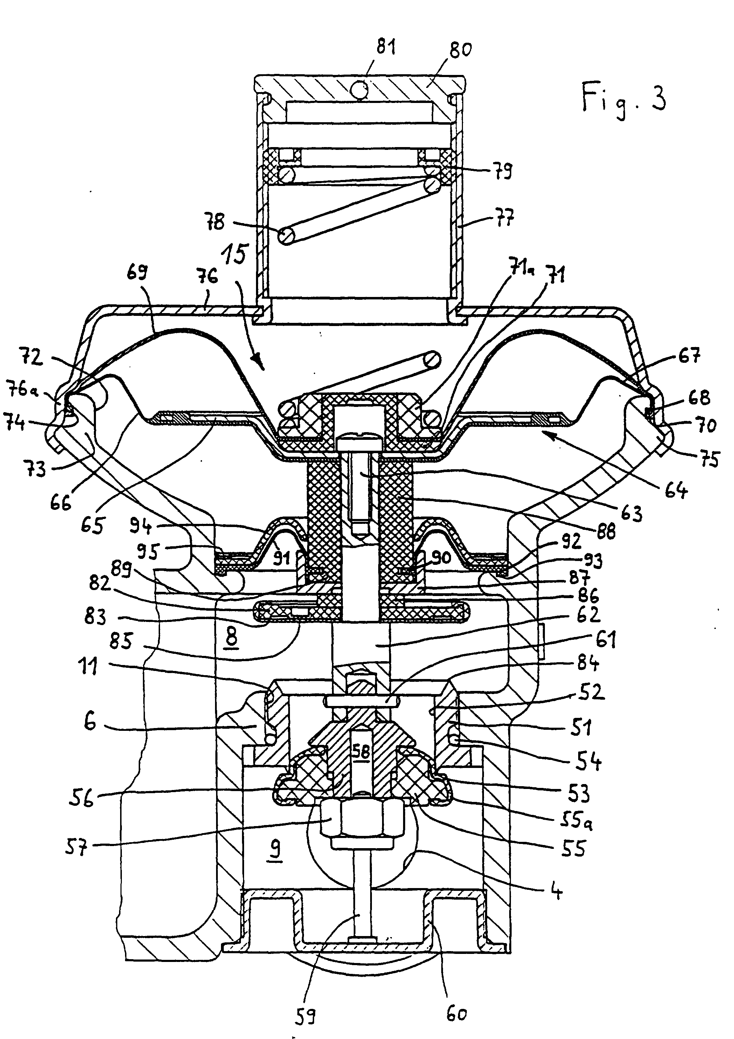

Das in Figur 1 dargestellte zweistufige Gasdruckregelgerät 1 weist ein Gehäuse 2 mit einem Gaseinlaß 3 und einem Gasauslaß 4 (Figur 3) auf, die gleichachsig an entgegengesetzten Seiten des Gehäuses 2 angeordnet sind. Eine Trennwand 5 und eine Trennwand 6 unterteilen das Gehäuse in eine Einlaßkammer 7, in die der Gaseinlaß 3 einmündet, eine Zwischenkammer 8 und eine Auslaßkammer 9, an die der Gasauslaß 4 angeschlossen ist. Die Trennwand 5 zwischen der Einlaßkammer 7 und der Zwischenkammer 8 weist eine Öffnung 10 auf, und in entsprechender Weise ist eine Öffnung 11 in der Trennwand 6 zwischen der Zwischenkammer 8 und der Auslaßkammer 9 angeordnet.

Das Gasdruckregelgerät 1 weist ein Vorregelventil 12, dem ein Vorstellantrieb 13 (Vergleichsgerät) zugeordnet ist, ein Hauptregelventil 14, dem ein Hauptstellantrieb 15 (Vergleichsgerät) zugeordnet ist, und ein Sicherheitsabsperrventil 16 auf, dem ein Sicherheitsstellantrieb 17 zugeordnet ist.

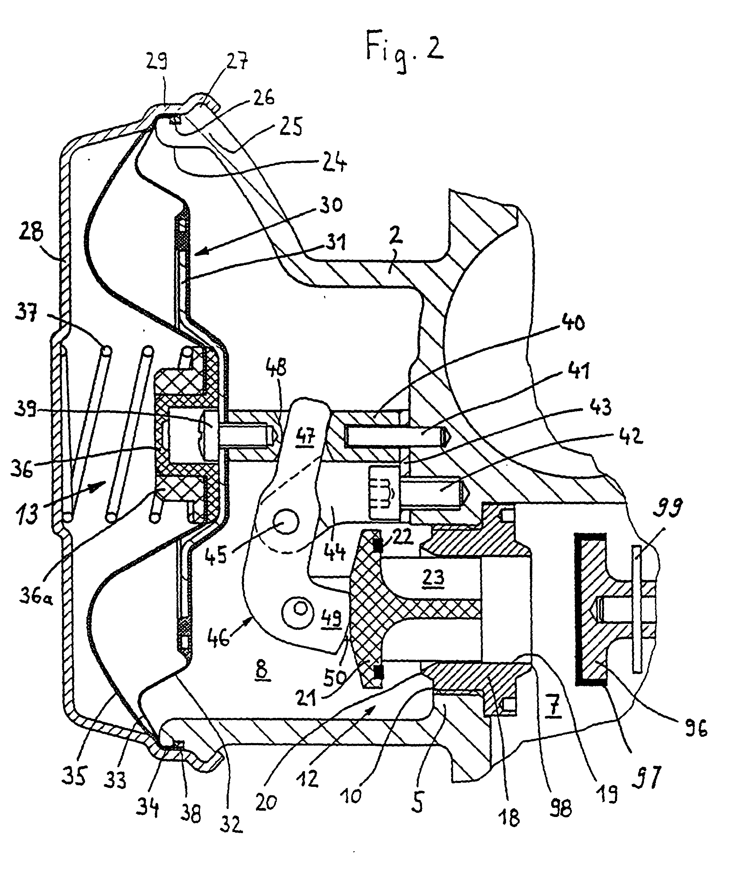

Wie insbesondere aus Figur 2 zu ersehen ist in die Öffnung 10 der Trennwand 5 eine rohrförmige oder ringförmige Düse 18 mit einer Düsenbohrung 19 eingeschraubt. Die nach beiden Seiten über die Trennwand 5 vorsteht. Die sich innerhalb der Zwischenkammer 8 befindende schmale Stirnseite der Düse 18 bildet den Vorventilsitz 20 des Vorregelventils 12. Mit dem Vorventilsitz 20 wirkt ein Vorventilkörper 21 mit einem eingesetzten Dichtungsring 22 zusammen. Der Vorventilkörper 21 ist mit in Umfangsrichtung verteilten Radialstegen 23 in der Düsenbohrung 19 axial verschiebbar geführt.

Das Gehäuse 2 weist im Bereich der Zwischenkammer 8 eine Montagedffnung 24 für das Vorregelventil 12 und seinen Vorstellantrieb 13 auf. Diese Montageöffnung 24 ist innerhalb eines Anschlußflansches 25, ein einstückiger Fortsatz des Gehäuses 2, ausgebildet. Der Anschlußflansch 25 weist an seinem Außenumfang randseitig eine ringförmige Umfangsnut 26 und dieser benachbart einen umlaufenden Außenwulst 27 auf.

Die Montageöffnung 24 ist durch einen topfförmigen Verschlußdeckel 28 verschlossen, dessen Deckelrand 29 in Anlage an den Außenwulst 27 verformt wurde und diesen dabei hintergreift. Der Verschlußdeckel 28 ist mit einer nicht dargestellten Belüftungsbohrung versehen.

Der Vorstellantrieb 13, der den Vorventilkörper 21 in Abhängigkeit vom Zwischendruck in der Zwischenkammer 8 verstellt, weist eine Membranordnung 30 mit einem Stützteller 31 auf, mit dem eine innere Membran 32 fest verbunden ist, deren radial über den Stützteller überstehender Membranrand 33 einen Randwulst 34 aufweist, der in die Umfangsnut 26 eingreift. Im Bereich einer zentralen Vertiefung des Stütztellers 31 liegt an diesem ein hutförmiger Membraneinsatz 36 an, auf den unter Einspannung des inneren Randes einer äußeren Membran 35 ein Federteller 36a aufgeschoben ist, an dem sich das innere Ende einer Vorspannfeder 37 abstützt, deren äußeres Ende in eine Vertiefung im Boden des Verschlußdeckels 28 eingreift.

Auch die äußere Membran 35, die aus Sicherheitsgründen für den Fall des Platzens oder sonstigen Versagens der inneren Membran 32 vorgesehen ist, ist an ihrem Außenumfang mit einem Randwulst 38 versehen, der wie der Randwulst 34 der inneren Membran 33 in der Umfangsnut 26 aufgenommen ist. Dabei ist der Deckelrand 29 so verformt, daß die Randwulste 34 und 38 in der Umfangsnut 26 sicher gehalten sind, ohne daß vom Verschlußdeckel 28 eine Belastung auf die Membranen 32 und 35 aufgebracht wird. Diese weisen im übrigen eine radiale Überlänge auf, so daß sich die Membrananordnung 30 funktionsgemäß in axialer Richtung verlagern kann.

Mittels einer Schraube 39 sind der Stützteller 31 und damit die gesamte Membrananordnung 30 im zentralen Bereich mit einem Anschlußstück 40 verbunden, das auf einem innerhalb des Gehäuses 2 an diesem befestigten Führungsstift 41 axial verschiebbar ist.

Innerhalb des Gehäuses 2 ist ferner mittels einer Schraube 42 eine Lagerplatte 43 mit zwei aufragenden Lagerbügeln 44 befestigt, zwischen denen sich eine Achse 45 zur verschwenkbaren Lagerung eines doppelarmigen Stellhebels 46 erstreckt. Der eine Arm 47 des Stellhebels 46 greift in eine Durchgangsöffnung 48 des Anschlußstücks 40 ein, die mittig ihren engsten Querschnitt aufweist und sich nach beiden Seiten hin wie dargestellt erweitert. Auf diese Weise führt eine axiale Bewegung des Anschlußstücks 40 zu einer entsprechenden Schwenkbewegung des Stellhebels 46. Diese Schwenkbewegung wird vom anderen Arm 49 des Stellhebels 46 auf den Vorventilkörper 21 übertragen - in der Schließrichtung durch direkten rückseitigen Angriff am Vorventilkörper 21 und in der Öffnungsrichtung über ein Zugglied 50.

Das Vorregelventil 12 ist im Sinne eines konstanten Zwischendrucks in der Zwischenkammer 8 wirksam. Dieser Zwischendruck wirkt über die Membrananordnung 30 entgegen der Kraft der Vorspannfeder 37, deren Vorspannkraft diesen Zwischendruck bestimmt. Eine Erhöhung dieses Zwischendrucks würde zu einer Verlagerung der Membrananordnung 30 und einer stärkeren Komprimierung der Vorspannfeder 37 führen, was über die Auswärtsverlagerung des Anschlußstücks 40 und die entsprechende Verschwenkung des Stellhebels 46 zu einer Verlagerung des Vorventilkörpers 21 in Richtung auf den Vorventilsitz 20 führt, so daß Druckgas aus der Einlaßkammer 7 nicht oder nur noch in geringerem Maße in die Zwischenkammer 8 übertreten kann, was einer Rückregelung auf den eingestellten Zwischendruck entspricht. In entsprechender Weise würde bei einem Absinken des Zwischendrucks der Vorventilkörper 21 weiter vom Vorventilsitz 20 abgehoben und dadurch ein verstärktes Überströmen von Druckgas aus der Einlaßkammer 7 und damit gleichfalls eine Rückregelung des Drucks in der Zwischenkammer 8 auf den vorgegebenen Sollwert erzielt.

In die Öffnung 11 der Trennwand 6 ist ebenfalls eine rohrförmige bzw. ringförmige Düse 51 eingeschraubt, die eine Düsenbohrung 52 aufweist, die im Gegensatz zur waagerechten Düsenbohrung 19 der Düse 18 des Vorregelventils 12 senkrecht ausgerichtet ist und in den Figuren mehr nach hinten in Richtung auf den Gasauslaß 4 versetzt angeordnet ist. Die Düse 51 weist an ihrem unteren Ende einen sich zu einer Spitze verjüngenden Axialvorsprung auf, der den Hauptventilsitz 53 des Hauptregelventils 14 bildet. Ein O-Ring 54 sorgt für die Abdichtung zwischen der Düse 51 und der Trennwand 6.

Dem Hauptventilsitz 53 ist ein Hauptventilkörper 55 zugeordnet, der mit einer Dichtungskappe 56a umkleidet ist. Deren oberes Ende ist zwischen dem Hauptventilkörper 55 und einem abgestuften Ventilträger 56 eingespannt, wobei der Hauptventilkörper 55 mittels einer auf einen Gewindevorsprung des Ventilträgers 56 aufgeschraubten Mutter 57 mit einer Selbstsicherung am Ventilträger 56 befestigt ist. Dieser weist eine Führungsbohrung 58 auf, mit der er axial auf einer Führungsstange 59 geführt ist, die an einem zylindrischen Blechformteil 60 befestigt ist, das stopfenartig in eine Gewindebohrung des Gehäuses 2 eingeschraubt ist.

Der Ventilträger 56 erstreckt sich zentral und mit Radialabstand nach oben durch die Düsenbohrung 52 und ist an seinem oberen Ende über einen Querstift 61 mit einer abgestuften Stellstange 62 verbunden.

Mittels einer Schraube 63 ist mit dem oberen Ende der senkrecht verlaufenden Stellstange 62 eine Membrananordnung 64 verbunden, die Teil des Hauptstellantriebs 15 ist und mit der Membrananordnung 30 des Vorstellantriebs 13 baugleich übereinstimmen kann. Dementsprechend weist auch die Membrananordnung 64 einen Stützteller 65, eine innere Membran 66 mit einem Membranrand 65 und einem Randwulst 68, eine äußere Membran 69 mit einem Randwulst 70 und einen Membraneinsatz 71 sowie einen Federteller 71a auf.

Auch hier ist im Gehäuse eine Montageöffnung 72 innerhalb eines Anschlußflansches 73 mit einer Umfangsnut 74 zur Aufnahme der Randwulste 68 und 70 und mit einem Außenwulst 75 vorgesehen, auf dem ein Verschlußdeckel 76 in gleicher Weise wie der Verschlußdeckel 28 befestigt ist. Dabei weist der Anschlußflansch 73 gleiche Form und Größe wie der Anschlußflansch 25 auf.

Der Verschlußdeckel 76 weist in seinem zentralen Bereich einen Federdom 77 auf, der das äußere Ende der innenseitig am Federteller 71a abgestützten Vorspannfeder 78 aufnimmt. In den Federdom 77 ist ein Federeinstellring 79 eingeschraubt, so daß sich die den Ausgangsdruck bestimmende Federkraft der Vorspannfeder 78 einstellen läßt. Der Federdom 77 ist durch einen Deckel 80 mit einer Belüftungsbohrung 81 verschlossen.

Auf der Stellstange 62 ist oberhalb der Düse 51 in der Zwischenkammer 8 ein Gasmangel- Absperrteller 82 angeordnet, der mit einer Gasmangelmembran 83 versehen ist. Der Absperrteller 82 bewegt sich mit dem Hauptventilkörper 55, und wenn dieser sich bei abfallendem Abgabedruck in der Auslaßkammer vollständig öffnet, legt sich der Absperrteller 82 auf den an der Oberseite der Düse 51 gebildeten Sicherungsventilsitz 84, was eine Absperrung bewirkt. Allerdings ist die Absperrung nicht vollständig, denn der Absperrteller 82 ist mit einer Gasmangelsicherung in Form einer zwischen seinen Flachseiten verlaufenden Bypass-Bohrung 85 versehen. Durch die Bypass-Bohrung 85 kann Gas in geringer Menge in die Auslaßkammer 9 überströmen, wodurch die Bildung eines explosiven Gasgemisches verhindert wird.

Der Sicherungsteller 82 mit der Gasmangelmembran 83 ist auf den oberen Stellstangenabschnitt von kleinerem Durchmesser aufgesteckt und liegt dabei an der Stellstangenschulter an. Ferner sind auf den oberen Stellstangenabschnitt eine Scheibe 82, ein topfförmiges Sicherungsteil 87 und eine Abstandshülse 88 aufgesteckt und mittels der Schraube 63 fixiert. Das untere Ende der Abstandshülse 88 weist eine Umfangsnut 89 auf, die einen Innenrandwulst 90 einer ringförmigen Ausgleichsmembran 91 aufnimmt, die mit einem Außenrandwulst 92 in eine ringförmige Gehäusenut 93 eingreift. Die Ausgleichsmembran 91 stützt sich in der in Figur 3 gezeigten Stellung oberseitig an einem Stützring 94 ab, der in Verbindung mit einem Seeger-Zackenring 95 den Außenrandwulst 93 in der Gehäusenut 93 sichert. Der Innenrandwulst 90 ist dadurch in der Umfangsnut 89 gesichert, daß die Abstandshülse 88 mit ihrem die Umfangsnut 89 aufweisenden unteren Ende in das topfförmige Sicherungsteil 87 eingreift. Funktionsgemäß entspricht die Wirkfläche der Ausgleichsmembran 91 dem Öffnungsquerschnitt des Hauptventilsitzes 53.

Das Sicherheitsabsperrventil 16 und sein Stellantrieb 17 sind gleichachsig mit dem Vorregelventil 12 angeordnet. Dabei wirkt der Absperrventilkörper 96, der mit einem Dichtungsbelag 97 belegt ist, mit der in der Einlaßkammer 7 angeordneten, einen Absperrventilsitz 98 bildenden rechten Stirnseite der Düse 18 zusammen.

Durch einen Querstift 99 ist der Absperrventilkörper 96 mit einer langgestreckten Ventilstange 100 fest verbunden. Diese erstreckt sich durch ein separates Gehäuseteil 101, das in einem zylindrischen Gehäusefortsatz 102 des Gehäuses 2 (siehe Fig. 1) eingebaut ist. Dabei ist die Einbaustellung durch einen gleichzeitig in das Gehäuseteil 101 und in den Gehäusefortsatz 102 eingreifenden Federring 103 gesichert, während die Abdichtung zwischen dem Gehäuseteil 101 und dem Gehäusefortsatz 102 durch zwei O-Ringe 104 und 105 gewährleistet ist.

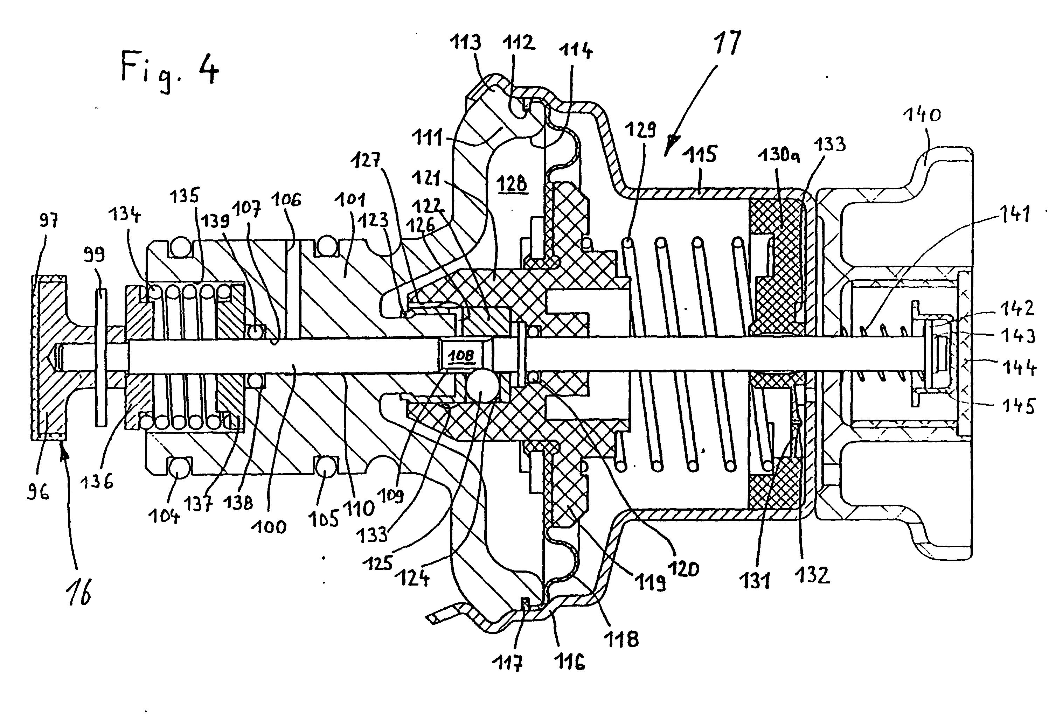

Eine zwischen den O-Ringen 104 und 105 vorgesehene Radialbohrung 106 im Gehäuseteil 101 ist an ihrem äußeren Ende mit der Auslaßkammer 9 verbunden und mündet an ihrem inneren Ende in die zentrale Bohrung 107, welche die Ventilstange 100 aufnimmt. Diese ist in einem mittleren Bereich mit einer an beiden Enden abgeschrägten Einschnürung 108 versehen, wodurch eine Ringkammer 109 gebildet ist, die durch den in Figur 4 angedeuteten Ringspalt 110 am Außenumfang der Ventilstange 100 mit der Radialbohrung 106 in Verbindung steht.

Das Gehäuseteil 101 weist an seinem äußeren (rechten) Ende einen Anschlußflansch 111 auf, der wie die Anschlußflansche 25 und 73 eine Umfangsnut 112 und einen Außenwulst 113 aufweist. Die vom Anschlußflansch 111 umgebene Flanschöffnung 114 ist durch einen topfförmigen Deckel 115 verschlossen, dessen Rand 115 wiederum um den Außenwulst 113 herum verformt ist und einen Außenrandwulst 117 einer Membran 118 in der Umfangsnut 112 fixiert.

Der zentrale verdickte Bereich der Membran 118 ist an einem Membranteller 119 befestigt. Durch diesen erstreckt sich die Ventilstange 100, wobei ein O-Ring 120 zur Abdichtung vorgesehen ist. Der Membranteller 119 weist einen ringförmigen Fortsatz 121 auf, der sich axial zum Gehäuseteil 101 erstreckt und einen Einsatz 122 aus Messing gleitend aufnimmt, der mit einem verformten Rand 123 am Gehäuseteil 101 fixiert ist. Die Ventilstange 100 erstreckt sich auch durch den Einsatz 122, der im Bereich der Einschnürung 108 drei gleichmäßig in Umfangsrichtung verteilte Radialbohrungen 124 aufweist, von denen in Figur 4 nur eine zu sehen ist. Jede Radialbohrung 124 nimmt eine Sperrkugel 125 auf, die wie dargestellt an der Innenumfangsfläche des Fortsatzes 121 anliegt und dabei in die Einschnürung 108 eingreift. Dementsprechend kann sich die in Figur 1 mit dem Absperrventilkörper 96 in der Offenstellung dargestellte Ventilstange 100 nicht in die Absperrstellung (nach links) verlagern.

Der Einsatz 122 weist ferner im Bereich der Einschnürung 108 eine Radialbohrung 126 auf, die an ihrem äußeren Ende mit einer am Innenumfang des Fortsatzes 121 vorgesehenen Axialnut 127 in Verbindung steht. Diese öffnet in eine Absperrventilkammer 128, in der folglich über die Radialbohrung 106, den Ringspalt 110, die Einschnürung 108, die Radialbohrung 126 und die Axialnut 127 stets der Ausgangsdruck des Gasdruckregelgeräts 1 herrscht.

Der Druck in der Absperrventilkammer 128 wirkt auf den Membranteller 119 entgegen der Kraft einer Sollwertfeder 129, die rückseitig am Membranteller 119 angreift und sich mit ihrem anderen Ende an einem in den Deckel 115 eingesetzten Federhalter 130 abstützt. In diesem ist durch Aussparungen nahe dem zentralen Boden des Deckels 115 ein dünner Abschnitt 131 mit einer Entlüftungsbohrung 132 ausgebildet, die über eine Ringnut 130a in der Rückseite des Federhalters 130 mit der Umgebung in Verbindung steht.

Die Funktion des Sicherheitsabsperrventils 16 besteht darin, bei einem überhöhten Ausgangsdruck am Gasauslaß 4 das Gasdruckregelgerät 1 abzusperren. Dieser Ausgangs- oder Abgabedruck herrscht wie bereits dargelegt in der Absperrventilkammer 128. Bei einem Anstieg des Ausgangsdrucks über eine durch die Sollwertfeder 129 bestimmten Druckhöhe verlagert sich der Membranteller 119 mit dem Fortsatz 121 in Figur 4 nach rechts, bis eine am Innenumfang des Fortsatzes 121 vorgesehene Ringnut 133 mit einem den Sperrkugeln 125 angepaßten Profil radial auf die Sperrkugeln 125 ausgerichtet ist. Diese verlagern sich dann entsprechend radial auswärts und geben die Ventilstange 100 frei, die sich dann nach links bis zur Anlage des Absperrventilkörpers 96 mit seinem Dichtungsbelag 97 am Absperrventilsitz 98 verlagert, so daß der Gasstrom durch das Gasdruckregelgerät 1 abgesperrt ist.

Diese Verlagerung in die Absperrstellung wird durch eine gemäß Figur 4 in komprimierter Stellung befindliche Auslösefeder 134 bewirkt, die in einer stirnseitigen zentralen Aussparung 135 am linken Ende des Gehäuseteils 101 angeordnet und zwischen zwei Federtellern 136 und 137 auf der Ventilstange 100 eingespannt ist. Am Boden der Aussparung 135 ist eine Vertiefung 138 von kleinerem Durchmesser zur Aufnahme eines O-Rings 139 ausgebildet, der an der Ventilstange 100 abdichtend anliegt.

Am Boden des Deckels 115 liegt außenseitig ein Entriegelungsknopf 140 an, der dazu dient, nach dem vorbeschriebenen Auslösevorgang eine Rückstellung des Sicherheitsabsperrventils aus der Absperrstellung in die Offenstellung gemäß Figur 4 vorzunehmen. Dazu wird der Entriegelungsknopf 140 in axialer Richtung vom Deckel 115 weggezogen, wodurch zunächst eine Feder 141 gespannt und dann die Ventilstange 100 nach rechts mitgenommen wird, weil sich die Feder 141 an einer Stützscheibe 142 abstützt, die mittels eines Sprengrings 143 mit der Ventilstange 100 verbunden ist. Bei dieser Rückstellung der Ventilstange 100 wird die Auslösefeder 134 wieder gespannt und verlagern sich die Sperrkugeln 125 radial einwärts aus der Ringnut 133 in die Einschnürung 108. Bei Nachlassen der manuellen Zugwirkung auf den Entriegelungsknopf 140 geht auch dieser unter der Wirkung der Feder 141 wieder zurück bis in Anlage an den Deckel 115 so daß die Ausgangsstellung gemäß Figur 4 wieder erreicht ist.

In den Entriegelungsknopf 140 ist zentral und in radialer Ausrichtung eine milchige durchscheinende Scheibe 144 eingesetzt, an deren Innenseite in der dargestellten Offenstellung eine farbige, beispielsweise grüne, Signalkappe 145 anliegt, die das Ende der Ventilstange 100 umgreift und sich mit dieser bewegt. Die durch die Scheibe 144 nur bei anliegender Signalkappe 146 sichtbare grüne Farbe zeigt den normalen Betriebszustand mit geöffnetem Sicherheitsabsperrventil 16 an.

Auch beim Sicherheitsabsperrventil 16 ist ein Schutz für den Fall eingebaut, daß die Membran 118 platzen sollte. In diesem Fall wirkt der in der Absperrventilkammer 128 herrschende Ausgangsdruck auch innerhalb des die Sollwertfeder 129 aufnehmenden Deckels 115. Durch diesen Druck wird der dünne Abschnitt 131 mit der Entlüftungsbohrung 132 an den benachbarten Boden des Deckels 115 angedrückt, so daß Gas nur in geringer Menge entweichen kann.

Die Erfindung ist nicht auf das in den Figuren konkret dargestellte Ausführungsbeispiel beschränkt, vielmehr sind auch Abwandlungen möglich, ohne von dem grundsätzlichen Erfindungsgedanken abzuweichen, der vor allem auch darin besteht, daß drei in der Funktion voneinander unabhängige Baugruppen vorgesehen, in einem Gehäuse integriert und hintereinander geschaltet sind. Dabei ist als erste Baugruppe das als Vorstufe dienende Vorregelventil 12 mit seinem Stellantrieb 13, als zweite Baugruppe das als Hauptstufe dienende Hauptregelventil 14 mit seinem zugeordneten Stellantrieb 15 und als dritte Baugruppe das Sicherheitsabsperrventil 16 mit seinem zugehörigen Sicherheitsstellantrieb 17 vorgesehen.

Die einzelnen Baugruppen sind voneinander in ihrer Funktion unabhängig, wobei dies insbesondere dann bedeutsam ist, wenn eine Baugruppe ausfällt. Dann übernimmt eine andere Baugruppe die Funktion bzw. das Sicherheitsabsperrventil 16 schließt, wenn der Druck über vorgegebene Grenzdrücke steigt oder sinkt.

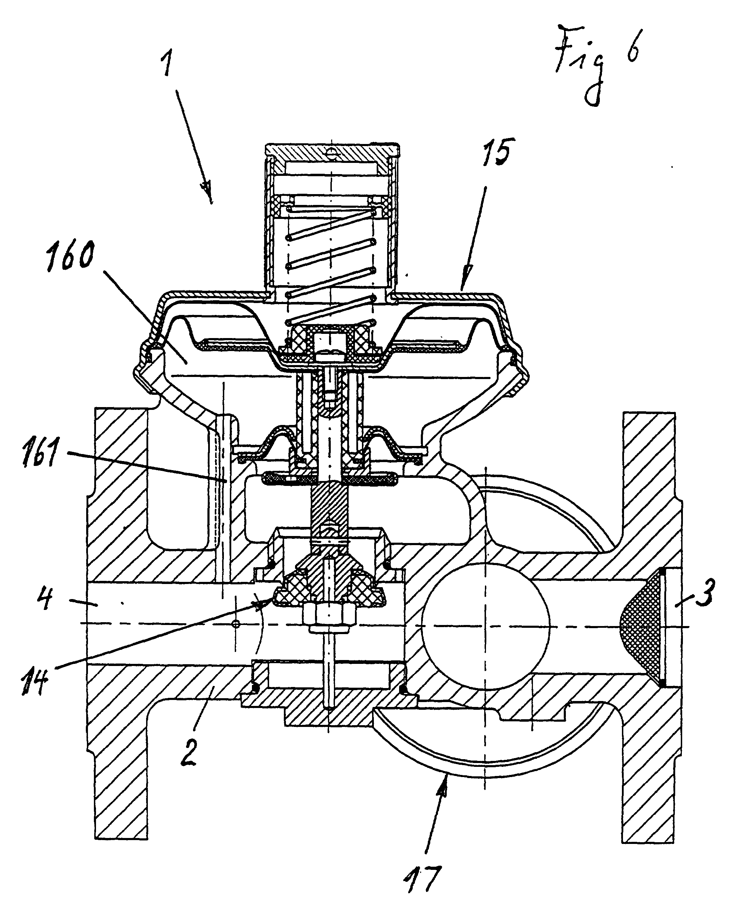

Gemäß Fig. 6 ist das ventilseitige Membrankammer-Teil 160 des Hauptstellantriebes 15 über eine Bohrung 161 mit dem Gasauslaß 4 verbunden, so daß im Membrankammer-Teil 160 der Auslaßdruck herrscht. Ferner steht der Gasauslaß 4 über eine Bohrung 162 und die bereits oben erwähnte Radialbohrung 106 mit der ventilseitigen, auch bereits oben erwähnten Absperrventilkammer 128 des Sicherheitsstellantriebes 17 in Verbindung, so daß auch dort der Ausgangsdruck herrscht. Entsprechend wird das als dritte Baugruppe vorgesehene Sicherheitsabsperrventil 16 zusammen mit seinem Sicherheitsstellantrieb 17 von dem Ausgangsdruck gesteuert.

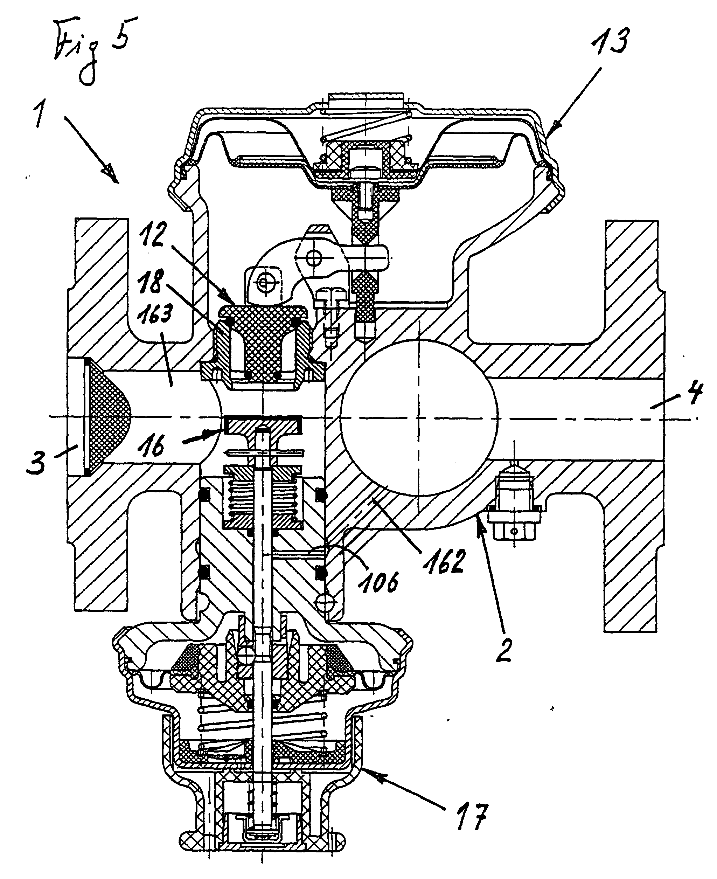

Damit das Vorregelventil 12 und das koaxial angeordnete Sicherheitsabsperrventil 16 von zwei Seiten her mit einer einzigen, ringförmigen Düse 18 zusammenwirken können, ist die ringförmige Düse 18 gemäß Fig. 5 außermittig bzw. seitlich versetzt zu dem Gaseinlaßkanal 163 (Fig. 5) angeordnet.

## Patentansprüche

1. Zweistufiger Gasdruckregler mit einem Gehäuse (2), das einen Gaseinlaß (3) zu einer Einlaßkammer (7), eine Zwischenkammer (8) und eine Auslaßkammer (9) mit einem Gasauslaß (4) aufweist, mit einem Vorregelventil (12), das einen Vorventilkörper (21) mit einem zugeordneten Vorstellantrieb (13) und einem Vorventilsitz (20) aufweist, der einer Öffnung (10) in einer Trennwand (5) zwischen der Einlaßkammer (7) und der Zwischenkammer (8) zugeordnet ist, und mit einem Hauptregelventil (14), das einen Hauptventilkörper (55) mit einem zugeordneten Hauptstellantrieb (15) und einem Hauptventilsitz (53) aufweist, der einer Öffnung (11) in einer Trennwand (6) zwischen der Zwischenkammer (8) und der Auslaßkammer (9) zugeordnet ist, und wobei zusätzlich ein Sicherheitsabsperrventil (16) mit einem zugehörigen Sicherheitsstellantrieb (17) und somit drei Baugruppen vorgesehen sind und in ein Gehäuse (2) integriert sind, dadurch gekennzeichnet, daß
a. die Wirkrichtung des Hauptregelventiles (14) einerseits und
b. die Wirkrichtung des Vorregelventiles (12) und die des Sicherheitsabsperrventiles (16) andererseits
c. jeweils die Achse von Gaseinlaß (3) und Gasauslaß (4) in das Gehäuse (2) schneiden und
d. wobei ferner die Wirkrichtungen des Hauptregelventiles (14) einerseits und des Vorregelventiles (12) und des Sicherheitsabsperrventiles (16) andererseits um 90 Grad zueinander versetzt sind.

2. Gasdruckregler nach Anspruch 1, dadurch gekennzeichnet, daß der Gaseinlaß (3) und der Gasauslaß (4) längs einer Achse angeordnet sind.

3. Gasregelventil nach Anspruch 1, dadurch gekennzeichnet, daß eine die Achse von Gaseinlaß (3) und Gasauslaß (4) schneidende Trennwand ( ) zwischen dem Vorregelventil (12) und dem Sicherheitsabsperrventil (16) einerseits und dem Hauptregelventil (14) andererseits angeordnet ist.

4. Gasdruckregler nach mindestens einem der vorhergehenden Ansprüche, dadurch gekennzeichnet, daß der Hauptstellantrieb (15) des Hauptregelventiles (14) eine erste Membran (66) und eine zweite Membran (91) sowie ein Membrankammer-Teil (160) aufweist, das über eine Bohrung (161) mit dem Gasauslaß (4) verbunden ist.

5. Gasdruckregler nach mindestens einem der vorhergehenden Ansprüche, dadurch gekennzeichnet, daß die eine Membran (66) des Hauptstellantriebes (15) großflächig ist und daß die andere Membran (91) des Hauptstellantriebes (15) kleinflächig ist.

6. Gasdruckregler nach mindestens einem der vorhergehenden Ansprüche, dadurch gekennzeichnet, daß der Gasauslaß (4) mit der ventilseitigen Ventilkammer (128) des Sicherheitsstellantriebes (17) in Verbindung steht.

7. Gasdruckregler nach mindestens einem der vorhergehenden Ansprüche, **dadurch gekennzeichnet**, daß auch dem Sicherheitsstellantrieb (17) ein Anschlußflansch (111) von gleicher Form und Größe wie die Anschlußflansche (25, 73) für den Vorstellantrieb (13) und/oder den Hauptstellantrieb (15) zugeordnet ist.

8. Gasdruckregler nach mindestens einem der vorhergehenden Ansprüche, **dadurch gekennzeichnet,** daß die Anschlußflansche (25, 73, 111) eine Umfangsnut (26, 74, 112) zur Aufnahme des wulstförmigen Außenrandes (34, 38; 68, 70; 117) der Stellantriebsmembran (32, 35; 66, 69; 118) und einen Außenwulst (27, 75, 113) zum Anbringen eines Verschlußdeckels (28, 76, 115) mit einem den Außenwulst (27, 75, 113) hintergreifenden verformbaren Rand (29, 76a, 116) aufweisen.

9. Gasdruckregler nach mindestens einem der vorhergehenden Ansprüche, **dadurch gekennzeichnet**, daß die Verschlußdeckel (28, 76, 115) in ihrer verformten Schließstellung den Randwulst (34, 38; 68, 70; 117) der Stellantriebsmembran (32, 35; 66, 69; 118) abdichtend in der Umfangsnut (26, 74, 112) des Anschlußflansches (25, 73, 111) halten.

10. Gasdruckregler nach mindestens einem der vorhergehenden Ansprüche, **dadurch gekennzeichnet,** daß die Verschlußdeckel (28, 76, 115) eine die Stellantriebsmembran (32, 35; 66, 69; 118) axial vorspannende Feder (37, 78, 129) direkt oder über ein Zwischenglied (77, 79; 113) rückseitig abstützen.

11. Gasdruckregler nach mindestens einem der vorhergehenden Ansprüche, **dadurch gekennzeichnet,** daß das Vorregelventil (12) und das Sicherheitsabsperrventil (16) gleichachsig angeordnet sind, wobei die zugehörigen Ventilsitze (20, 98) von den beiden entgegengesetzten Stirnflächen einer Düse (18) gebildet sind, die in die Trennwandöffnungen (10) zwischen der Einlaßkammer (7) und der Zwischenkammer (8) eingebaut ist.

12. Gasdruckregler nach mindestens einem der vorhergehenden Ansprüche, **dadurch gekennzeichnet,** daß der Gaseinlaß (3) und der Gasauslaß (4) des Gehäuses (2) gleichachsig sowie rechtwinklig zum Vorregelventil (12) und/oder Sicherheitsabsperrventil (16) verlaufen und daß das Hauptabsperrventil (14) rechtwinklig sowohl zum Gaseinlaß (3) und Gasauslaß (4) wie zum Vorregelventil (12) und/oder Sicherheitsabsperrventil (14) angeordnet ist, gegenüber denen es in Richtung auf den Gasauslaß (4) versetzt ist.

13. Gasdruckregler nach mindestens einem der vorhergehenden Ansprüche, **dadurch gekennzeichnet,** daß dem Hauptregelventil (14) ein bei abfallendem Druck in der Zwischenkammer (8) und/oder in der Auslaßkammer (9) schließendes Absperrorgan (82) zugeordnet ist, das mit einer Gasmangelsicherung in Form eines Bypasses (85) versehen ist.

14. Gasdruckregler nach mindestens einem der vorhergehenden Ansprüche, **dadurch gekennzeichnet,** daß die Ventilsitze (53, 84) mit denen der Hauptventilkörper (55) bzw. das Absperrorgan (82) zusammenwirken, von den beiden entgegengesetzten Stirnflächen einer rohrförmigen Düse (51) gebildet sind, die in die Trennwandöffnung (11) zwischen der Zwischenkammer (8) und der Auslaßkammer (9) eingebaut ist.

15. Gasdruckregler nach mindestens einem der vorhergehenden Ansprüche, **dadurch gekennzeichnet,** daß der Vorstellantrieb (13) und der Hauptstellantrieb (15) gleiche Membrananordnungen (30, 64) aufweisen.

16. Gasdruckregler nach mindestens einem der vorhergehenden Ansprüche, **dadurch gekennzeichnet,** daß das Gehäuse (2) zwei dem Vorregelventil (12) mit dem Vorstellantrieb (13) bzw. dem Hauptregelventil (14) mit dem Hauptstellantrieb (15) zugeordnete Montageöffnungen (24, 72) aufweist, wobei die Montageöffnungen (24, 72) innerhalb von Anschlußflanschen (25, 73) gleicher Form und Größe angeordnet sind.

17. Gasdruckregler nach mindestens einem der vorhergehenden Ansprüche, **dadurch gekennzeichnet,** daß von den drei Stellantrieben (13, 15, 17) zwei oder alle drei zumindest teilweise baugleich ausgeführt sind.

18. Gasdruckregler nach mindestens einem der vorhergehenden Ansprüche, **dadurch gekennzeichnet,** daß das ventilseitige Membrankammerteil (160) des Hauptstellantriebes (15) über eine Bohrung (161) mit dem Gasauslaß (4) in Verbindung steht und daß die ventilseitig angeordnete Absperrventilkammer (128) des Sicherheitsstellantriebes (17) über mindestens eine Bohrung (106, 162) mit dem Gasauslaß (4) in Verbindung steht.

## Claims

1. Two-stage gas pressure regulator with a housing (2) which comprises a gas inlet (3) to an inlet chamber (7), an intermediate chamber (8) and an outlet chamber (9) with a gas outlet (4), a preliminary regulating valve (12), which comprises a preliminary valve body (21) with an associated presetting drive (13) and a preliminary valve seat (20), which is associated with an opening (10) in a partition (5) between the inlet chamber (7) and the intermediate chamber (8), and a main regulating valve (14), which comprises a main valve body (55) with an associated main setting drive (15) and a main valve seat (53), which is associated with an opening (11) in a partition (6) between the intermediate chamber (8) and the outlet chamber (9), and wherein in addition a safety blocking valve (16) with an associated safety setting drive (17) and thus three sub-assemblies are provided and integrated in a housing (2), characterised in that
a. the effective direction of the main regulating valve (14) on the one hand and
b. the effective direction of the preliminary regulating valve (12) and that of the safety blocking valve (16) on the other hand
c. each intersect the axis of gas inlet (3) and gas outlet (4) in the housing (2) and
d. wherein the effective directions of the main regulating valve (14) on the one hand and the preliminary regulating valve (12) and the safety blocking valve (16) on the other hand are offset by 90 degrees relative to one another.

2. Gas pressure regulator according to claim 1, characterised in that the gas inlet (3) and the gas outlet (4) are arranged along an axis.

3. Gas regulating valve according to claim 1, characterised in that a partition intersecting the axis of gas inlet (3) and gas outlet (4) is arranged between the preliminary regulating valve (12) and the safety blocking valve (16) on the one hand and the main regulating valve (14) on the other hand.

4. Gas pressure regulator according to at least one of the preceding claims, characterised in that the main setting drive (15) of the main regulating valve (14) comprises a first diaphragm (66) and a second diaphragm (91) as well as a diaphragm chamber part (160), which is connected with the gas outlet (4) by way of a bore (161).

5. Gas pressure regulator according to at least one of the preceding claims, characterised in that one diaphragm (66) of the main setting drive (15) has a large area and the other diaphragm (91) of the main setting drive (15) has a small area.

6. Gas pressure regulator according to at least one of the preceding claims, characterised in that the outlet (4) is connected with the valve chamber (128), which is at the valve side, of the safety setting drive (17).

7. Gas pressure regulator according to at least one of the preceding claims, characterised in that a connecting flange (111) of the same shape and size as the connecting flange (25, 73) for the presetting drive (13) and/or the main setting drive (15) is also associated with the safety setting drive (17).

8. Gas pressure regulator according to at least one of the preceding claims, characterised in that the connecting flange (25, 73, 111) has a circumferential groove (26, 74, 122) for reception of the bead-shaped outer edge (34, 38; 68, 70; 117) of the setting drive diaphragm (32, 35; 66, 69; 118) and an outer bead (27, 75, 113) for the mounting of a closure cover (28, 76, 115) with a deformable edge (29, 76a, 116) engaging behind the outer bead (27, 75, 113).

9. Gas pressure regulator according to at least one of the preceding claims, characterised in that the closure cover (28, 76, 115) in its deformed closed setting sealingly retains the edge bead (34, 38; 68, 70; 117) of the setting drive diaphragm (32, 35; 66, 69; 118) in the circumferential groove (26, 74, 112) of the connecting flange (25, 73, 111).

10. Gas pressure regulator according to at least one of the preceding claims, characterised in that the closure cover (28, 76, 115) at the rear side supports directly or by way of an intermediate element (77, 79; 113) a spring (37, 78, 129) axially biassing the setting drive diaphragm (32, 35; 66, 69; 118).

11. Gas pressure regulator according to at least one of the preceding claims, characterised in that the preliminary regulating valve (12) and the safety blocking valve (16) are arranged on the same axis, wherein the associated valve seats (20, 98) are formed by the two opposite end faces of a nozzle (18) which is incorporated in the partition openings (10) between the inlet chamber (7) and the intermediate chamber (8).

12. Gas pressure regulator according to at least one of the preceding claims, characterised in that the gas inlet (3) and the gas outlet (4) of the housing (2) extend on the same axis and at right angles to the preliminary regulating valve (12) and/or safety blocking valve (16) and that the main blocking valve (14) is arranged at right angles not only to the gas inlet (3) and gas outlet (4), but also to the preliminary regulating valve (12) and/or safety blocking valve (14), relative to which it is displaced in direction towards the gas outlet (4).

13. Gas pressure regulator according to at least one of the preceding claims, characterised in that a blocking element (82), which closes when the pressure drops in the intermediate chamber (8) and/or in the outlet chamber (9) and which is provided with safety means, in the form of a bypass (85), for gas absence, is associated with the main regulating valve (14).

14. Gas pressure regulator according to at least one of the preceding claims, characterised in that the valve seats (53, 84) with which the main valve body (55) and the blocking element (82), respectively, co-operate are formed by the two opposite end faces of a tubular nozzle (51), which is incorporated in the partition opening (11) between the intermediate chamber (8) and the outlet chamber (9).

15. Gas pressure regulator according to at least one of the preceding claims, characterised in that the presetting drive (13) and the main setting drive (15) comprise the same diaphragm arrangements (30, 64).

16. Gas pressure regulator according to at least one of the preceding claims, characterised in that the housing (2) has two mounting openings (24, 72) respectively associated with the preliminary regulating valve (12) with the presetting drive (13) and with the main regulating valve (14) with the main setting drive (15), wherein the mounting openings (24, 72) are arranged within connecting flanges (25, 73) of the same shape and size.

17. Gas pressure regulator according to at least one of the preceding claims, characterised in that, of the three setting drives (13, 15, 17), two or all three are executed to be constructionally identical at least in part.

18. Gas pressure regulator according to at least one of the preceding claims, characterised in that the diaphragm chamber part (160), which is at the valve side, of the main setting drive (15) is connected with the gas outlet (4) by way of a bore (161) and that the blocking valve chamber (128), which is arranged at the valve side, of the safety setting drive (17) is connected with the gas outlet (4) by way of at least one bore (106, 162).

## Revendications

1. Régulateur de pression de gaz à deux étages avec un boîtier (2) qui présente une entrée de gaz (3) à une chambre d'entrée (7), une chambre intermédiaire (8) et une chambre de sortie (9) avec une sortie de gaz (4), avec une vanne de réglage préalable (12), qui présente un corps de vanne préalable (21) avec une commande de réglage préalable associée (13) et un siège de vanne préalable (20), qui est associé à une ouverture (10) dans une paroi de séparation (5) entre la chambre d'entrée (7) et la chambre intermédiaire (8), et avec une vanne de réglage principale (14) qui présente un corps de vanne principal (55) avec une commande de réglage principale associée (15) et un siège de vanne principal (53), qui est associé à une ouverture (11) dans une paroi de séparation (6) entre la chambre intermédiaire (8) et la chambre de sortie (9), et où sont prévus de plus une vanne d'arrêt de sûreté (16) avec une commande de positionnement de sûreté associée (17) et que, par conséquent, trois groupes constructifs sont prévus et sont intégrés dans un boîtier (2), caractérisé en ce que
a. la direction d'action de la vanne de réglage principale (14) d'une part et
b. la direction d'action de la vanne de réglage préalable (12) et celle de la vanne d'arrêt de sûreté (16) d'autre part
c. coupent chacune l'axe de l'entrée de gaz (3) et celui de la sortie de gaz (4) dans le boîtier (2) et
d. où en outre les directions d'action de la vanne de réglage principale (14), d'une part, et de la vanne de réglage préalable (12) et de la vanne d'arrêt de sûreté (16), d'autre part, sont décalées de 90 degrés les unes relativement aux autres.

2. Régulateur de pression de gaz selon la revendication 1, caractérisé en ce que l'entrée de gaz (3) et la sortie de gaz (4) sont disposées le long d'un axe.

3. Vanne de réglage de gaz selon la revendication 1, caractérisée en ce qu'une paroi de séparation (5, 6) séparant l'axe de l'entrée de gaz (3) et la sortie de gaz (4) est disposée entre la vanne de réglage préalable (12) et la vanne d'arrêt de sûreté (16), d'une part, et la vanne de réglage principale (14), d'autre part.

4. Régulateur de pression de gaz selon au moins l'une des revendications précédentes, caractérisé en ce que la commande de positionnement principale (15) de la vanne de réglage principale (14) présente une première membrane (66) et une deuxième membrane (91) ainsi qu'une partie de chambre à membrane (160) qui est reliée par un perçage (161) à la sortie de gaz (4).

5. Régulateur de pression de gaz selon au moins l'une des revendications précédentes, caractérisé en ce qu'une membrane (66) de la commande de positionnement principale (15) a une grande surface et que l'autre membrane (91) de la commande de positionnement principale (15) a une petite surface.

6. Régulateur de pression de gaz selon au moins l'une des revendications précédentes, caractérisé en ce que la sortie de gaz (4) est en liaison avec la chambre de vanne (128) côté vanne de la commande de positionnement de sûreté (17).

7. Régulateur de pression de gaz selon au moins l'une des revendications précédentes, caractérisé en ce qu'il est associé également à la commande de positionnement de sûreté (17) une bride de raccordement (111) de la même forme et grandeur que les brides de raccordement (25, 73) pour la commande de positionnement préalable (13) et/ou la commande de positionnement principale (15).

8. Régulateur de pression de gaz selon au moins l'une des revendications précédentes, caractérisé en ce que les brides de raccordement (25, 73, 111) présentent une rainure périphérique (26, 74, 112) pour la réception du bord extérieur en forme de bourrelet (34, 38 ; 68, 70 ; 117) de la membrane d'entraînement de positionnement (32, 35 ; 66, 69 ; 118) et un bourrelet extérieur (27, 75, 113) pour l'application d'un couvercle de fermeture (26, 76, 115) avec un bord déformable (29, 76a, 116) passant derrière le bourrelet extérieur (27, 75, 113).

9. Régulateur de pression de gaz selon au moins l'une des revendications précédentes, caractérisé en ce que les couvercles de fermeture (28, 76, 115) dans leur position de fermeture déformée, retiennent le bourrelet de bord (34, 38 ; 68, 70 ; 117) de la membrane d'entraînement de positionnement (32, 35 ; 66 ; 69 ; 118) d'une manière étanche dans la rainure périphérique (26, 74, 112) de la bride de raccordement (25, 73, 111).

10. Régulateur de pression de gaz selon au moins l'une des revendications précédentes, caractérisé en ce que les couvercles de fermeture (28, 76, 115) supportent au côté arrière, directement ou par un organe intermédiaire (77, 79 ; 113) un ressort (37, 78, 129) précontraignant axialement la membrane d'entraînement de positionnement (32, 35 ; 66, 69 ; 118).

11. Régulateur de pression de gaz selon au moins l'une des revendications précédentes, caractérisé en ce que la vanne de réglage préalable (12) et la vanne d'arrêt de sûreté (16) sont disposées équiaxialement, où les sièges de vanne associés (20, 98) sont formés par les deux faces frontales opposées d'une buse (18), qui est montée dans les ouvertures de paroi de séparation (10) entre la chambre d'entrée (7) et la chambre intermédiaire (8).

12. Régulateur de pression de gaz selon au moins l'une des revendications précédentes, caractérisé en ce que l'entrée de gaz (3) et la sortie de gaz (4) du boîtier (2) s'étendent équiaxialement ainsi que perpendiculairement à la vanne de réglage préalable (12) et/ou à la vanne d'arrêt de sûreté (16), et en ce que la vanne d'arrêt principale (14) est disposée perpendiculairement à la fois à l'entrée de gaz (3) et à la sortie de gaz (4) ainsi qu'à la vanne de réglage préalable (12) et/ou la vanne d'arrêt de sûreté (14) par rapport auxquelles elle est décalée en direction de la sortie de gaz (4).

13. Régulateur de pression de gaz selon au moins l'une des revendications précédentes, caractérisé en ce qu'il est associé à la vanne de réglage principale (14) un organe d'arrêt (82) qui se ferme lors d'une pression descendante dans la chambre intermédiaire (8) et/ou dans la chambre de sortie (9), qui est pourvu d'une déclenche de sûreté sous la forme d'une dérivation (85).

14. Régulateur de pression de gaz selon au moins l'une des revendications précédentes, caractérisé en ce que les sièges de vanne (53, 84) avec lesquels coopèrent le corps de vanne principal (55) respectivement l'organe d'arrêt (82), sont formés par les deux faces frontales opposées d'une buse tubulaire (51) qui est montée dans l'ouverture de paroi de séparation (11) entre la chambre intermédiaire (8) et la chambre de sortie (9).

15. Régulateur de pression de gaz selon au moins l'une des revendications précédentes, caractérisé en ce que la commande de positionnement préalable (13) et la commande de positionnement principale (15) présentent des agencements de membrane similaires (30, 64).

16. Régulateur de pression de gaz selon au moins l'une des revendications précédentes, caractérisé en ce que le boîtier (2) présente deux ouvertures de montage (24, 72) associées à la vanne de réglage préalable (12) avec la commande de positionnement préalable (13) respectivement à la vanne de réglage principale (14) avec la commande de positionnement principale (15), où les ouvertures de montage (24, 72) sont ménagées à l'intérieur de brides de raccordement (25, 73) de même forme et grandeur.

17. Régulateur de pression de gaz selon au moins l'une des revendications précédentes, caractérisé en ce que parmi les trois entraînements de positionnement (13, 15, 17), deux ou tous les trois sont construits au moins partiellement d'une manière identique.

18. Régulateur de pression de gaz selon au moins l'une des revendications précédentes, caractérisé en ce que la partie de chambre de membrane (160) côté vanne de la commande de positionnement principale (15) est en liaison par un perçage (161) avec la sortie de gaz (4), et en ce que la chambre de vanne d'arrêt (128), disposée côté vanne, de la commande de positionnement de sûreté (17) est en liaison par au moins un perçage (106, 162) avec la sortie de gaz (4).
